## Europäisches Patentamt
## European Patent Office
## Office européen des brevets

(19)

(11) Veröffentlichungsnummer : **0 217 198**
**B1**

(12) **EUROPÄISCHE PATENTSCHRIFT**

(45) Veröffentlichungstag der Patentschrift :
**09.11.88**

(51) Int. Cl.⁴ : **A 47 J 31/40**

(21) Anmeldenummer : **86112629.0**

(22) Anmeldetag : **12.09.86**

(54) **Automatisch arbeitende Kaffeezubereitungsmaschine.**

(30) Priorität : **12.09.85 DE 3532488**

(43) Veröffentlichungstag der Anmeldung :
**08.04.87 Patentblatt 87/15**

(45) Bekanntmachung des Hinweises auf die Patenterteilung : **09.11.88 Patentblatt 88/45**

(84) Benannte Vertragsstaaten :
**CH LI NL SE**

(56) Entgegenhaltungen :
**EP-A- 0 100 030**
**WO-A-82 /011 20**
**CH-A- 510 424**
**CH-A- 588 243**
**DE-A- 1 812 654**
**DE-A- 2 053 466**
**DE-A- 3 240 990**
**DE-B- 1 248 883**
**FR-A- 2 212 122**
**FR-A- 2 226 137**
**FR-A- 2 286 626**
**FR-A- 2 352 525**

(73) Patentinhaber : **HGZ Maschinenbau AG**
**Industriestrasse 34**
**CH-8108 Dällikon - ZH (CH)**

(72) Erfinder : **Sager, Peter**
**Rebbergstrasse 25**
**CH-8113 Boppelsen (CH)**

(74) Vertreter : **Patentanwälte Dipl.-Ing. Rudolf Bibrach**
**Dipl.-Ing. Elmar Rehberg**
**Postfach 1453 Pütterweg 6**
**D-3400 Göttingen (DE)**

EP 0 217 198 B1

Jouve, 18, rue St-Denis, 75001 Paris, France

**Beschreibung**

Die Erfindung bezieht sich auf eine automatisch arbeitende Kaffeezubereitungsmaschine mit einem Gehäuse, an dem über den Umfang verteilt ein Zugabetrichter für dosiertes Kaffeepulver, ein mit einem Sieb versehener Auslauf für das zubereitete Kaffeegetränk sowie eine Öffnung zum Abführen der Rückstände vorgesehen sind, mit einem in dem Gehäuse gelagerten und absatzweise angetriebenen Rotor, der mindestens zwei randoffene und in der Brühstellung durch das Sieb des Auslaufs abgedeckte und abgedichtete Arbeitsräume aufweist, in denen das Kaffeepulver mittels mindestens zweier miteinander verbundener, gegenläufig hydraulisch betätigbarer Kolben wahlweise verdichtet wird und in der Brühstellung von heißem, dosiertem Wasser in Richtung auf den Auslauf am Gehäuse durchflossen ist. Die Erfindung beschäftigt sich damit mit einer solchen Gattung von Kaffeezubereitungsmaschinen, bei denen der Arbeitsraum beweglich, also auf einem in einem statorartigen Gehäuse drehbar angeordneten Rotor vorgesehen ist.

Eine Kaffeezubereitungsmaschine mit den im Oberbegriff des Anspruchs 1 angegebenen Merkmalen ist aus der DE-A-2 544 060 bekannt. Mit einer solchen Vorrichtung kann automatisch beispielsweise Expresskaffee hergestellt werden, und zwar trotz der Anordnung von zwei Arbeitsräumen und zwei Kolben nur jeweils eine Menge des Kaffeegetränks. Der wesentliche Zweck der Doppelanordnung der Arbeitsräume und der Kolben ist somit der, daß die Ausstoßbewegung des einen Kolbens für die Rückstände, also im wesentlichen das ausgelaugte Kaffeepulver, dazu benutzt wird, um den anderen Arbeitsraum gleichzeitig aufnahmebereit für das Einbringen einer weiteren Kaffeepulvermenge bereitzustellen. Mit dieser bekannten Vorrichtung läßt sich pro Brühcharge immer nur eine konstante Menge Kaffeegetränk herstellen, beispielsweise eine Tasse Kaffee. Selbstverständlich ist es möglich, zwei solche Brühchargen nacheinander ablaufen zu lassen und unter dem Auslauf der Maschine ein größeres Gefäß, beispielsweise eine Kaffeekanne, zu plazieren, um durch mehrere Brühchargen hintereinander jeweils ein ganzzahliges Vielfaches des Kaffeegetränks durch ganzzahlige Vervielfachung der Brühchargen abzufangen. Auch ist es denkbar, die Kaffeepulverdosierung zeitlich oder volumetrisch auf den gewünschten Wert konstruktiv oder montageseitig einzustellen, um somit relativ zu der Wasserdosierung die Güte bzw. Stärke des Kaffeegetränks einzustellen, die dann jedenfalls durch den Benutzer der Kaffeemaschine nicht abgeändert werden kann. Es ist aber nicht möglich, mit dieser bekannten Maschine in unterschiedlichen Brühchargen unterschiedliche Mengen des Kaffeegetränks wahlweise herzustellen. Die im Arbeitsraum durch den Kolben in der Brühstellung zunächst zu einem scheibenartigen Körper verdichtete Kaffeepulvermenge wird während des Brühprozesses, also während der Durchdringung mit dem Brühwasser infolge der Stufenkolbenausbildung vom Druck des Kolbens entlastet, so daß schwer überschaubar ist, ob der Preßling während des Brühvorgangs seine Form beibehält oder zerstört wird. Am Ende des Brühvorgangs ist das Kaffeepulver auf jeden Fall feucht bzw. nass. Der Ausstoß nach erfolgter absatzweiser Weiterdrehung des Rotors erfolgt durch den durch die überfahrene Steuerdichtung eingeschlossenen Restdruck, so daß die Gefahr besteht, daß das nasse Kaffeepulver nicht vollständig aus dem Arbeitsraum entfernt wird.

Aus der DE-A-1 812 654 ist eine teilweise ähnlich aufgebaute Kaffeezubereitungsmaschine bekannt, die ebenfalls einen Rotor und einen Stator aufweist und bei der drei Stationen über den Umfang des absatzweise weiterschaltenden Rotors vorgesehen sind. Der Rotor weist auch hier zwei Kolben gleichen Durchmessers und zwei auf diese Art gebildete Arbeitsräume auf. Die Kolben sind jedoch nicht miteinander verbunden, sondern werden unabhängig voneinander betätigt. Die Steuerung erfolgt auch hier durch überfahrbare Steuerdichtungen. Auch hier ist der Steuerraum und der Brühraum jedes Kolbens jeweils dauernd miteinander verbunden und auf der dem Motor abgewandten Seite des Rotors ist auch hier der übliche Durchlauferhitzer vorgesehen. Die beiden Kolben werden wechselweise betrieben. Dabei gelangt nur eine konstante Kaffeepulvermenge zum Einsatz, während in Verbindung damit mehrere wahlweise abrufbare Wassermengen eingesetzt werden, so daß Kaffeegetränke ungleicher Stärken in unterschiedlichen Mengen entstehen. Durch die Anordnung des Durchlauferhitzers auf der dem Motor abgekehrten Seite des Gehäuses der Maschine wird zwar vorteilhaft das Gehäuse der Kaffeezubereitungsmaschine mit erwärmt und bei kurzfristigen Betriebsunterbrechungen warmgehalten, es erscheint jedoch nicht möglich, die Anzahl der überfahrbaren Steuerdichtungen zu erhöhen und beispielsweise eine überfahrbare Steuerdichtung für die Zufuhr von kaltem Wasser vorzusehen. Durch die fluchtende Anordnung von Motor, Stator und Durchlauferhitzer baut diese bekannte Vorrichtung vergleichsweise breit, während der Aufstellplatz einer solchen Kaffeezubereitungsmaschine am Aufstellungsort meist begrenzt ist. Der Ausstoß des ausgelaugten, nassen Kaffeepulvers erfolgt auch hier durch den eingeschlossenen Druck nach Überfahren einer Steuerdichtung. Es liegen hier prinzipiell die gleichen Nachteile der Maschine vor, wie bei der gattungsgemäßen Maschine.

Die DE-C-1 248 883 zeigt eine Kaffeezubereitungsmaschine mit einem statorartigen Gehäuse und einem darin absatzweise weiterschaltenden Rotor. Auch hier ist die Dichtung des Arbeitsraums in der Brühstellung auf dem Stator angeordnet. Der Stator besitzt drei unabhängig voneinander betätigbare Kolben. Jeder Arbeitsraum ist auch hier mit dem zugehörigen Steuerraum seines Kolbens dauern verbunden. Trotz der Dreifachanordnung werden hier nur jeweils eine konstante Pulvermenge mit einer konstanten Wassermenge zusammengebracht, so daß pro Brühcharge nur jeweils eine Menge Kaffeegetränk in konstanter Qualität bzw. Stärke herstellbar ist. Der Vorteil dieser Dreifachanordnung ist darin zu sehen, daß der Rotor pro Brühcharge nur um 120° weiterschalten muß. Durch die Zusammenpressung des Kaffeepulvers im Arbeitsraum zu Beginn eines Brühprozesses soll das Kaffeepulver besser ausgenutzt werden. Auch hier wird das ausgelaugte Kaffeepulver nass ausgestoßen.

Aus der CH-A-588 243 ist eine Kaffeemaschine grundsätzlich abweichender Bauart bekannt, die keinen Rotor aufweist. Es ist ein ortsfester, zylindrischer Arbeitsraum geschaffen, in welchem der Brühvorgang abläuft. Der Arbeitsraum ist durch zwei getrennt steuerbare und im Winkel von 90° zueinander angeordnete Kolben verschließbar. Die hydraulische Betätigung der beiden Kolben und die Beschickung des Arbeitsraums mit der Heißwassermenge erfolgen grundsätzlich getrennt voneinander und unter Verwendung von einzelnen, steuerbaren Ventilen, so daß die jeweiligen Betätigungszeiten frei wählbar bzw. steuerbar sind. Trotzdem ist mit dieser Maschine auch nur eine Kaffeepulvermenge und eine einstellbare Wassermenge in Verbindung zu bringen, um in einer Brühcharge eine bestimmte, festgelegte Menge des Kaffeegetränks herzustellen. Die Abfuhr des ausgelaugten Kaffeepulvers erfolgt durch eine gesonderte Naßspülung des Arbeitsraums.

In der internationalen Anmeldung mit der Veröffentlichungsnummer WO-A-82/01120 ist eine Kaffeemaschine bekannt, die ebenfalls ohne Rotor, aber mit einem ortsfesten Arbeitsraum betrieben wird, der mit nur einem festgelegten Volumen durch zwei unabhängig voneinander betätigbare Kolben in seiner Größe festgelegt wird. Die Betätigung der Kolben ist insbesondere unabhängig von der Beschickung des Arbeitsraums mit dem heißen Wasser. Steuerkreislauf für die Betätigung der Kolben und die Beschickung des Brühkreislaufs sind damit unabhängig voneinander. Die Kolbenwege sind jedoch konstant. Auch das Brühraumvolumen ist konstant. Dieses wird mit losem Pulver ohne Preßvorgang beschickt, um den Brühvorgang in losem Zustand durchzuführen und damit mit einer kleinen Menge Kaffeepulver die Herstellung von aromatischem, starkem Kaffee anzustreben. Dank der unabhängig voneinander arbeitenden Arbeitskolben soll die Kaffeepulvermenge dosiert und damit die Aromastärke bestimmt werden können. Ob und wie eine Kaffeepulverdosierung erreicht wird, bleibt offen. Trotz der Trennung der hydraulischen Steuerung der beiden Kolben von der Beschickung des Arbeitsraums mit dem Brühwasser ist es nicht möglich, mit dieser bekannten Vorrichtung wahlweise unterschiedliche Brühchargen durchzuführen, und zwar in dem Sinne, daß unterschiedlich dosiertes Kaffeepulver wahlweise mit unterschiedlich dosiertem Wasser zusammengebracht und somit in unterschiedlichen Brühchargen unterschiedliche Mengen von Kaffeegetränk frisch zubereitet werden.

Weiterhin ist es der Hausfrau bei der manuellen Herstellung von Filterkaffee bekannt, daß die Kaffeequalität, also die Stärke des Getränks, dann ansteigt, wenn die Wassermenge einerseits und die Kaffeepulvermenge andererseits bei gleicher Relation ansteigend in einer gemeinsamen Brühcharge zusammengefaßt werden. Zur Einsparung von Kaffeepulver bei trotzdem etwa gleicher angestrebter Qualität des Kaffeegetränks ist es der Hausfrau bekannt, bei einer kleinen Brühcharge im Verhältnis zu einer großen Brühcharge relativ mehr Kaffeepulver einzusetzen. Mit automatisch arbeitenden Kaffeemaschinen ist eine solche Arbeitsweise bisher jedoch nicht möglich.

Der Erfindung liegt die Aufgabe zugrunde, eine automatisch arbeitende Kaffeezubereitungsmaschine der eingangs angegebenen Art zu schaffen, mit der mindestens zwei unterschiedliche Mengen eines qualitativ zumindest etwa gleich guten (starken) Kaffeegetränks wahlweise jeweils frisch in zwei voneinander getrennten Brühchargen und unter relativer Einsparung und unter besserer Ausnutzung von Kaffeepulver herstellbar sind.

Erfindungsgemäß wird dies dadurch erreicht, daß dem Zugabetrichter eine wahlweise mindestens zwei unterschiedlich große Kaffeepulvermengen abgebende Dosiereinrichtung zugeordnet ist, daß eine Einrichtung zum wahlweisen Beschicken der Arbeitsräume mit zwei unterschiedlich großen Mengen heißen Wassers vorgesehen ist, daß die beiden Kolben und damit die Arbeitsräume unterschiedliche Durchmesser aufweisen, und daß die Beschickung der Arbeitsräume mit heißem Wasser einerseits und die hydraulische Betätigung der Kolben andererseits voneinander getrennt und über separate Ventile und Leitungen gesteuert sind. Durch die unterschiedlichen Durchmesser der Kolben und damit der Arbeitsräume ist es möglich, die Geometrie der Preßlinge aus Kaffeepulver unterschiedlicher Mengen günstig im Sinne einer optimalen Ausnutzung des dosierten Kaffeepulvers zu beeinflussen. So ist es beispielsweise vorteilhaft, die Höhe des zu einer Scheibe gepreßten Kaffeepulvers bei unterschiedlich dosierten Kaffeepulvermengen nicht allzu sehr voneinander abweichen zu lassen, insbesondere den Durchdringungsweg des Brühwassers durch die Scheibe etwa gleichlang — also unabhängig von der Brühcharge — festzulegen, was nur möglich ist, wenn bei gleicher Zusammendrückung des Kaffeepulvers der Durchmesser der Scheibe verändert wird. Es werden also zumindest zwei unterschiedlich große Arbeitsräume geschaffen, die wahlweise in der Brühstellung mit dem Auslauf der Maschine für das Kaffeegetränk in Verbindung gebracht werden können. Die beiden Arbeitsräume unterscheiden sich im wesentlichen durch unterschiedliche Durchmesser. Jedem Arbeitsraum ist zu seiner Befüllung mit Kaffeepulver eine Dosiereinrichtung zugeordnet, mit der getrennt voneinander mindestens zwei unterschiedlich große, abzugebende Kaffeepulvermengen eingestellt werden können. Die beiden Mengen können unabhängig voneinander festgelegt werden, so daß die für z. B. die doppelte Menge des in einer Brühcharge herzustellenden Kaffeegetränks erforderliche Kaffeepulvermenge vorteilhaft unter Einsparung von Kaffeepulver weniger betragen kann als das Doppelte der für die kleine Brühcharge bestimmten Kaffeepulvermenge. Mit anderen Worten bei der für ein Kännchen Kaffee (zwei Tassen) bestimmten Brühcharge wird relativ weniger Kaffeepulver eindosiert als bei der für die Herstellung der einzelnen Tasse bestimmten Kaffeepulvermenge. Für die beiden unterschiedlichen Brühchargen ist dann auch eine Einrichtung zum wahlweisen Beschicken der Arbeitsräume mit mindestens zwei unterschiedlich großen Mengen heißen Wassers vorgesehen. Jede Brühcharge kann also auch hinsichtlich ihrer Wassermenge unabhängig voneinander ein- und festgestellt werden, insbesondere im Sinne einer gleichmäßigen Qualität des Kaffeegetränks. Die hydraulische Betätigung der Kolben wird von der Beschickung der Arbeitsräume mit heißem Wasser getrennt, so daß nicht nur der Vorteil entsteht, einerseits heißes Wasser und andererseits kaltes Wasser einzusetzen. Es wird auch das Prinzip der überfahrbaren Steuerdichtungen verlassen und stattdessen werden separate Ventile und Leitungen eingesetzt, um unabhängig voneinander und von dem jeweiligen Drehwinkel des Rotors — auch in Zwischenstellungen — Preßvorgänge, Entlastungsvorgänge der Kaffeepulverscheibe und Ausstoßvorgänge des ausgelaugten Kaffeepulvers — nach Erfordernis und Wunsch — automatisch bereitstellen zu können. Dies erbringt neben anderen Vorteilen den überraschenden Vorteil bei der erfindungsgemäßen Kaffeemaschine, daß die Scheibe aus gepreßtem Kaffeepulver gegen Ende des Brühvorgangs durch einen Preßvorgang ausgepreßt und damit trockengepreßt werden kann, so daß das Kaffeepulver — unabhängig von der jeweiligen Menge — optimal ausgenutzt wird und ein Trockenausstoß des Kaffeepulverpreßlings in der Ausstoßstation möglich wird. Am Kaffeepulver noch anhaftende Restfeuchtigkeit kann an der warmen Tablette verdampfen, so daß das ausgelaugte Kaffeepulver praktisch in trockenem Zustand und auf engstem Raum zusammengepreßt anfällt. Ohne Nachteil dafür kann der Kaffeepulverpreßling ohne Druckeinwirkung auf ihn nach Beendigung des Brühvorgangs aus der Brühstellung in die Ausstoßstation überführt werden, so daß eine Verunreinigung der Maschine zwischen Stator und Rotor auch dann unterbleibt, wenn die Dichtung des Arbeitsraums statorseitig vorgesehen ist. Die Kaffeezubereitungsmaschine erhält durch die Trennung der Betätigung der Kolben einerseits und der Beschickung der Arbeitsräume andererseits mit den Brühchargen eine große Freiheit hinsichtlich der Variation der Zeiten, in denen die einzelnen Arbeitsabläufe stattfinden. Es ist auch ohne weiteres möglich, beispielsweise trotz Beibehaltung von nur zwei Arbeitsräumen mit zwei verschiedenen Durchmessern — mehr als zwei Mengen Kaffeegetränk in wahlweise durchzuführenden Brühchargen herzustellen. Es ergibt sich ohne weiteres die Möglichkeit, auch mehrere Kaffeegetränke ihrer Art nach, z. B. Milchkaffee, Kaffee crème, Kaffee Luz usw. herzustellen, wobei je nach der gewünschten Stärke bzw. dem unterschiedlichen Verhältnis von Kaffeepulver und Wassermenge, die jeweiligen Mengen miteinander kombiniert werden können. Schließlich arbeitet die neue Maschine auch vergleichsweise schneller als alle bekannten Automaten, was zunächst einmal schon darin begründet ist, daß die größere Brühcharge eben als gesonderte Brühcharge durchgeführt wird und nicht in der Verdopplung der kleinen Brühcharge zu sehen ist. So ist es beispielsweise möglich, die neue Maschine mit zwei unterschiedlichen Brühchargen auszurüsten, einmal für Einzeltasse und einmal für Kännchen (2 Tassen). Die Maschine läßt sich so betreiben, daß in der Bereitschaftsstellung der kleinere Arbeitsraum immer unter dem Zugabetrichter steht, so daß die kleine Kaffeepulvermenge nach dem Drücken der Taste für eine Einzeltasse an der Maschine ohne Rotorbewegung z. B. durch die Zeitsteuerung einer Kaffeemühle unmittelbar gemahlen und in den kleinen Arbeitsraum überführt werden kann. Es schließt sich dann, wie ersichtlich, der zugehörige Brühvorgang an. Wird dagegen die Taste an der Maschine für die Durchführung einer Brühcharge zur Herstellung eines Kännchen Kaffees gedrückt, dann wird zunächst der Rotor um 180° gedreht, so daß der große Arbeitsraum unter den Zugabetrichter gelangt und die Kaffeemühle erst anschließend für eine längere Zeit betätigt wird, um die zugehörige Kaffeepulvermenge frisch zu mahlen und in den größeren Arbeitsraum zu überführen. Es schließt sich dann der zugehörige Brühvorgang an, wobei natürlich auch die zugehörige größere Heißwassermenge in der Brühstation durch die gepreßte Scheibe geleitet wird. Da die Kaffeepulvermenge jedoch weniger als das Doppelte der Kaffeepulvermenge für die einzelne Tasse beträgt, kann auch die Wassermenge geringfügig das Doppelte der Einzeltassenwassermenge unterschreiten, weil für die Durchfeuchtung des Kaffeepulvers weniger Wasser benötigt wird. Durch den größeren Durchmesser der Scheibe bei etwa gleichem Durchdringungsweg kann der Brühvorgang, also das Beschicken des Arbeitsraums mit dem Brühwasser, in vergleichsweise schnellerer Zeit durchgeführt werden, wodurch der geringe, zeitliche Nachteil der zuvor erwähnten Anfangsdrehung des Rotors um 180° zumindest ausgeglichen wird, wodurch der Vorteil entstehen wird, daß sowohl die Einzeltasse wie auch das Kännchen Kaffee in etwa gleicher Zeit und absolut gesehen relativ kurzer Zeit frisch zubereitet werden können. In diesem Beispiel wird zweckmäßig die Qualität des Kaffeegetränks unabhängig von den beiden unterschiedlichen Mengen konstant gehalten ; unbedingt erforderlich ist dies jedoch nicht, insbesondere, wenn man an die Herstellung von unterschiedlichen Arten von Kaffeegetränken denkt. All dies ist aber vorteilhaft auch mit der neuen Maschine möglich, wobei lediglich die Steuerung entsprechend auszubilden ist. So kann beispielsweise sowohl die Herstellung einer Einzeltasse Kaffee, einer Schale Milchkaffee und auch eines Kaffee « Luz » vorteilhaft mit Hilfe des den kleinen Durchmesser aufweisenden Arbeitsraums bewerkstelligt werden, während der Arbeitsraum mit dem großen Durchmesser z. B. für die Herstellung einer Einzeltasse Starkkaffee und/oder zwei Tassen Normalkaffees oder eines Espresso Verwendung finden kann.

Die Leitungen für eine Beschickung der beiden Arbeitsräume und die Leitungen für die Betätigung der beiden Kolben auf der dem Antrieb des Rotors abgekehrten Seite sind über Drehverbindungen an den Rotor herangeführt, wobei in den vier Leitungen vier einzeln steuerbare Magnetventile angeordnet sind. Damit ergibt sich eine große Freiheit für die Durchführung der einzelnen Verfahrensschritte und deren zeitliche Abstimmung aufeinander. So ist es beispielsweise möglich, die Scheibe oder Tablette aus gemahlenem, dosiertem Kaffeepulver zunächst trockenzupressen, damit sie eine stabile, etwa gleichmäßig poröse Form erhält und in dieser Form den Brühvorgang übersteht, obwohl der zugehörige Kolben nach dem Formpressen des dosierten Kaffees zu der Tablette oder Scheibe zumindest druckentlastet werden kann. Andererseits wird es damit möglich, gegen Ende des Brühvorgangs den Druck über den Kolben auf die Tablette wieder aufzubringen, um auf diesem Wege möglichst viel Feuchtigkeit und somit Kaffeegetränk auszupressen, so daß einerseits das Kaffeepulver gut ausgenutzt wird und andererseits in einen trockenen Zustand gerät, wie es für den Trockenauswurf erforderlich ist.

Die Durchführung der Erfindung setzt als notwendig eine Kaffeezubereitungsmaschine in der Rotor/Stator-Bauweise voraus. Dabei kann die Trommelbauweise oder vorzugsweise die Kugelbauweise verwirklicht sein. Jeder Arbeitsraum muß mindestens in der Brühstellung durch eine Dichtung abgedichtet sein. Jeder Arbeitsraum kann entweder eine eigene, auf dem Rotor angeordnete Dichtung aufweisen. Dies erbringt den Vorteil, daß eine Abdichtung nicht nur in der Brühstellung, sondern auch in jeder anderen Stellung erfolgt, insbesondere in der Zugabestellung und in der Ausstoßstellung. Aber auch in den Zwischenstellungen wird eine gewisse Dichtwirkung erreicht, die einer Verschmutzung des Zwischenraums zwischen Rotor und Stator vorbeugt, so daß aus dieser Anordnung der Dichtung eine erhöhte Lebensdauer der Maschine resultiert. Es ist aber auch möglich, für jeden Arbeitsraum eine gemeinsame, auf dem Gehäuse angeordnete Dichtung vorzusehen, die den Auslauf für das Kaffeegetränk umgibt. Der Durchmesser all dieser Dichtungen sollte größer als der Durchmesser der Öffnung zum Abführen der Rückstände ausgebildet sein.

Die beiden Kolben können je eine die Umlaufbahn des Rotors ergänzende Stirnfläche aufweisen und über eine gemeinsame, abgedichtet im Rotor geführte Kolbenstange so miteinander verbunden sein, daß der Anschlag des einen Kolbens an einer die Führung der Kolbenstange aufnehmenden Zwischenwand den Hub des jeweils anderen Kolbens mit seiner Stirnfläche in der Umlaufbahn des Rotors begrenzt. So sind die Stirnflächen der Kolben insbesondere bei kugelförmig ausgebildetem Stator ebenfalls kugelkappenförmig ausgebildet. Diese Form kann auch durch Anordnung eines entsprechend verformten Siebes an dieser Stelle erreicht werden. Durch diese Anordnung wird gleichzeitig verhindert, daß die Kolben über die Umlaufbahn des Rotors vortreten können.

Jeder Kolben weist neben der Abdichtung der Kolbenstange zwei Dichtungen auf, zwischen denen die Zufuhrleitung für das heiße Wasser in der Brühstellung in den Arbeitsraum hinein endet ; Zufuhrleitung weist in der Zylinderwandung des Kolbens angeordnete Durchbrüche auf, die in der Ausstoßstellung von der hinteren Dichtung des Kolbens überfahren sind. Hieraus resultiert ein kleiner Durchmesser des Rotors, also eine kleine Bauweise der Maschine. Darüberhinaus tritt der Vorteil auf, daß ein Teil der Zufuhrleitung für das heiße Wasser z. B. in der Ausstoßstellung über die Beaufschlagung des zugehörigen Kolbens bis zu der Entlüftung des Ventils in der Zufuhrleitung für das heiße Wasser gespült werden kann. In diesem Leitungsstück können an sich, insbesondere nach einer Entspannung des Arbeitsraums, Kaffeepulverrückstände gelangen, die entfernt werden müssen.

Die Drehverbindungen für die Leitungen zu den Kolben und den Arbeitsräumen sind vorzugsweise frei auf der dem Antrieb des Rotors abgekehrten Seite angeordnet, wobei der Durchlauferhitzer aus der Achse des Rotors heraus nach hinten versetzt vorgesehen ist. Damit entfällt eine komplizierte Leitungsdurchführung durch den Durchlauferhitzer und es ergibt sich gleichzeitig der besondere Vorteil, daß die Maschine eine schmale Bauweise erhält, weil Motor und Getriebe sowie Gehäuse und Durchlauferhitzer nicht mehr fluchtend zueinander angeordnet sind, wie dies an sich im Stand der Technik üblich ist.

Die unterschiedlichen Durchmesser der Kolben können im Hinblick auf die gewünschte Ausnutzung des Kaffeepulvers so gewählt sein, daß das dosierte, gepreßte Kaffeepulver ein optimales Durchmesser/Dickenverhältnis aufweist. So ist es insbesondere möglich, auf eine konstante Höhe der Scheiben oder Tabletten des gepreßten Kaffeepulvers hinzuwirken, um eine günstige Durchdringungsstrecke festzulegen. Selbst wenn die Dosierung der beiden Kaffeepulvermengen einzeln eingestellt oder auch verändert wird, ändert sich die Höhe der Tablette damit kaum, so daß die günstigen Verhältnisse auch dann beibehalten sind. So hat es sich beispielsweise als günstig erwiesen, dem kleinen Kolben einen Durchmesser von 42 und dem größeren Kolben einen Durchmesser von 52 mm zu geben. Die Höhe der Tabletten sollte in beiden Fällen etwa 10 mm betragen, wobei für die Einzeltasse beispielsweise 8 gr Kaffeepulver und für das Kaffeekännchen beispielsweise 14 gr Kaffeepulver eindosiert werden.

Die Erfindung wird anhand einiger Ausführungsbeispiele weiter verdeutlicht und beschrieben. Es zeigen :

Figur 1 einen Horizontalschnitt durch einen wesentlichen Teil der Kaffeezubereitungsmaschine gemäß der Linie I-I in Figur 2,

Figur 2 einen Vertikalschnitt durch den Teil der Kaffeezubereitungsmaschine gemäß der Linie II-II in Figur 1,

Figur 3 eine geschnittene Teildarstellung ähnlich wie Figur 2, jedoch in der Brühstellung und bei einer weiteren Ausführungsform der Kaffeezubereitungsmaschine, und

Figur 4 einen Schaltplan der Wasserführung mit weiteren Elementen der Kaffeezubereitungsmaschine.

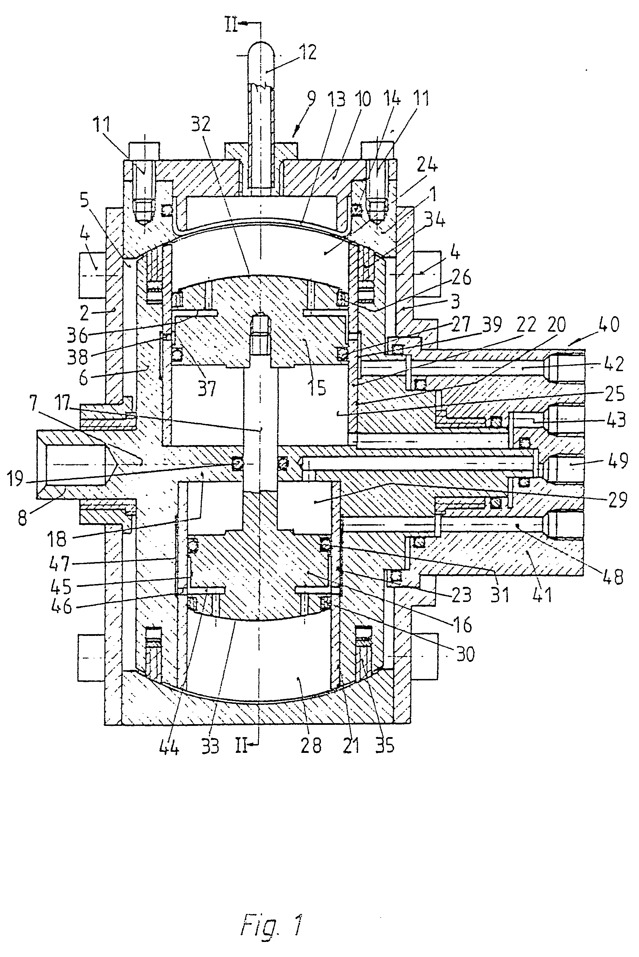

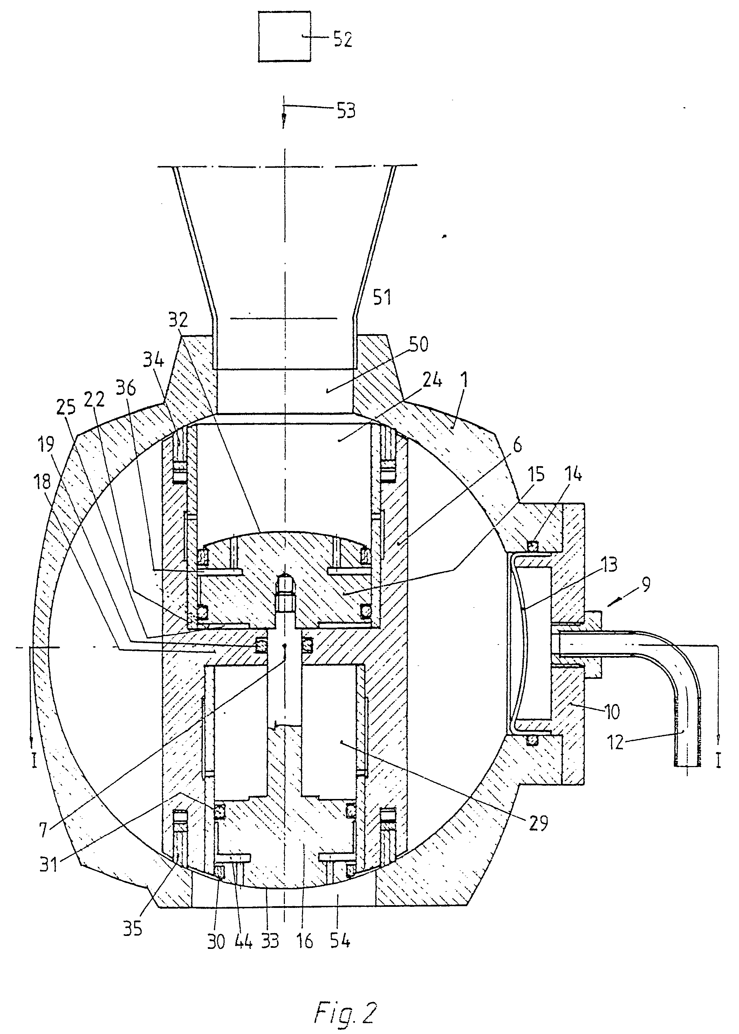

Die in den Figuren 1 und 2 dargestellte Kaffeezubereitungsmaschine weist ein Gehäuse 1 auf, zu dem auf der Antriebsseite ein Deckel 2 und auf der der Wasserzuführung dienenden Seite ein Deckel 3 gehören. Die Deckel 2 und 3 sind mit dem Gehäuse 1 durch Schrauben 4 verbunden. Das Gehäuse 1 und die Deckel 2 und 3 bilden einen Innenraum 5, in welchem ein Rotor 6 drehbar gelagert ist, der um eine Drehachse 7 absatzweise umlaufend angetrieben wird. Der Antrieb erfolgt über einen Motor und ein Getriebe (beides nicht dargestellt) und greift auf der Seite des Deckels 2 an einem Stutzen 8 des Rotors 6 an. Das Gehäuse 1 ist auf seiner inneren Oberfläche, den Innenraum 5 umschließend, kugelförmig ausgebildet. Der Rotor 6 kann entsprechend ausgebildet sein. Es versteht sich, daß auch eine Trommelbauweise möglich wäre.

Die in Figur 1 erkennbare Brühstation besitzt einen Auslauf 9, der einen Auslaufdeckel 10 aufweist, der mit Hilfe von Schrauben 11 am Gehäuse abnehmbar gelagert ist. Der Auslaufdeckel 10 trägt ein Auslaufröhrchen 12 für die Abgabe des fertigen Kaffeegetränks. Auf der Innenseite des Auslaufdeckels 10 ist ein Sieb 13 angeordnet und mit Hilfe einer Dichtung 14 dichtend gelagert. Das Sieb 13 schließt mit seiner nach innen gekehrten Oberfläche an die kugelförmige Oberfläche des Innenraums 5 des Gehäuses 1 an.

Auf dem Rotor 6 sind fluchtend zueinander zwei Kolben 15 und 16 verschiebbar gelagert, die beide über eine Kolbenstange 17 mechanisch miteinander verbunden sind. Die Kolbenstange 17 durchsetzt eine Zwischenwand 18 am Rotor 6, in welcher eine Dichtung 19 für die Kolbenstange 17 angeordnet ist. Die Zwischenwand 18 trennt somit zwei fluchtende zylindrische Bohrungen 20 und 21, die unterschiedlichen Durchmesser besitzen. In jeder Bohrung 20 und 21 ist eine Laufbüchse 22 und 23 untergebracht. Der Kolben 15 mit dem größeren Durchmesser teilt in der Laufbüchse 22 einen Arbeitsraum 24, der auch als Brühraum bezeichnet werden kann, und einen Hydraulikraum 25 ab, der für die Verschiebung des Kolbens 15 vorgesehen ist. Der Kolben 15 ist in der Laufbüchse 22 mit Hilfe der Dichtungen 26 und 27 dichtend geführt. Analog teilt der Kolben 16 mit dem kleineren Durchmesser in seiner Laufbüchse 23 einen Arbeitsraum 28 und einen Hydraulikraum 29 ab. Der Kolben 16 besitzt die beiden Dichtungen 30 und 31. Die Bohrungen 20 und 21 können mit unterschiedlichem Durchmesser vorgesehen sein. Es ist auch möglich, den gleichen Durchmesser zu verwenden und durch Einsatz von ihrer Wandstärke unterschiedlichen Laufbüchsen und entsprechenden Kolben letztlich Arbeitsräume 24 und 28 mit unterschiedlichen Durchmessern zu erreichen. Man erkennt, daß durch diese Maßnahme auch ein Umrüsten einer Maschine auf andere Durchmesserverhältnisse in einfacher Weise möglich ist. Der Kolben 15 weist eine Stirnfläche 32 und der Kolben 16 eine Stirnfläche 33 auf, die beide kugelkalottenförmig ausgebildet sind. Die Länge der Kolbenstange 17 und ihre Verbindung mit den beiden Kolben 15 und 16 ist so bemessen, daß der eine Kolben 15 an der Zwischenwand 18 dann zur Anlage kommt, wenn die Stirnfläche 33 des anderen Kolbens 16 den Umfang des Rotors ergänzt, also der Kolben 16 voll ausgefahren ist. Gleiches gilt umgekehrt. Damit ist sichergestellt, daß bei entsprechender Beaufschlagung der Hydraulikräume 25 bzw. 29 keiner der Kolben 15 oder 16 über den Umfang am Rotor vortreten kann. Der Arbeitsraum 24 ist durch eine auf dem Rotor 6 gelagerte Dichtung 34 abgedichtet. Für den Arbeitsraum 28 ist zum gleichen Zweck eine Dichtung 35 vorgesehen. Obwohl die Arbeitsräume 24 und 28 unterschiedliche Durchmesser aufweisen, ist der Durchmesser der Dichtungen 34 und 35 gleich groß und jedenfalls größer als der Durchmesser der sonstigen Öffnungen im Gehäuse 1 der Kaffeezubereitungsmaschine. Im Anschluß an den Arbeitsraum 24 endet in der Stirnfläche 32 des Kolbens 15 eine Zufuhrleitung 36 für heißes Wasser, die andererseits vermittels einer Kolbennut 37 an über den Umfang verteilt angeordnete Durchbrüche 38 anschließt, die in der Laufbüchse 22 vorgesehen sind. Um die Laufbüchse ist ein Ringraum 39 angeordnet, der über eine Drehverbindung 40 mit stillstehendem Teil 41 letztlich Anschluß an eine Leitung 42 hat, die somit der Zufuhr des heißes Wassers der Brühcharge in bzw. durch den Arbeitsraum 24 hindurch dient. Die Geometrie ist so getroffen, daß der Anschluß des heißen Wassers und seine Durchführung zwischen den beiden Dichtungen 26 und 27 in der Brühstellung erfolgen kann. In dieser Brühstellung dichtet die Dichtung 27 den Hydraulikraum 25 gegenüber der Zufuhr des heißen Wassers ab. Die Drehverbindung 40 hat, wie dargestellt, eine Vielzahl von Leitungsverbindungen, Absätzen und Dichtungen, so daß die betreffenden Leitungen untereinander abgedichtet an bzw. in den Rotor 6 hineingeführt werden. Eine Leitung 43 führt durch die Drehverbindung 40 und durch einen weiteren Durchbruch der Laufbüchse 22 letztlich zu dem Hydraulikraum 25. Die Leitung 43 dient der Verschiebung des Kolbens 15 in Richtung auf den Auslauf 9 bzw. in anderen Stellungen in gleicher Richtung, also in Richtung auf den Umfang des Rotors.

Entsprechend endet zwischen den Dichtungen 30 und 31 des Kolbens 16 eine Zufuhrleitung 44 für das Heißwasser, welches dem Arbeitsraum 28 zugeordnet ist. Auch hier weist der Kolben 16 eine Kolbennut 45 zwischen den beiden Dichtungen 30 und 31 auf. Die Laufbüchse 23 besitzt auch hier Durchbrüche 46, die über den Umfang verteilt angeordnet sind und somit die Zylinderwandung durch setzen. Ein Ringraum 47 dient dem Anschluß einer Leitung 48, über die das Heißwasser somit dem Arbeitsraum 28, wenn sich dieser in der Brühstellung befindet, zugeleitet wird. Der Hydraulikraum 29 wird über eine Leitung 49 zum Zwecke der Verschiebung des Kolbens 16 beaufschlagt.

Wie Figur 2 erkennen läßt, ist oben am Gehäuse eine Öffnung 50 und ein Zugabetrichter 51 angeordnet, durch den das frisch gemahlene Kaffeepulver in entsprechende Dosierung von einer Dosiereinrichtung 52 gemäß Pfeil 53 in den Arbeitsraum 24 gelangen kann, wenn sich gerade dieser Arbeitsraum unter dem Zugabetrichter 51 befindet und auch die größere Brühcharge durchgeführt werden soll. Figur 2 zeigt diese Stellung. Durch Beaufschlagung des Hydraulikraums 29 mit Kaltwasser ist der Kolben 16 und der Kolben 15 nach unten gefahren, so daß der Arbeitsraum 24 voll geöffnet ist. Die beispielsweise über eine Zeitsteuerung einer Kaffeemühle dosierte Kaffeepulvermenge kann also von dieser Dosiereinrichtung 52 in dieser Stellung in den Arbeitsraum 24 abgegeben werden. Sobald das Kaffeepulver in den Arbeitsraum 24 gelangt ist, schaltet der Rotor 6 um 90° weiter, so daß der Arbeitsraum 24 vor den Auslauf 9 gelangt, wie dies Figur 1 zeigt. Durch Beaufschlagung des Hydraulikraums 25 mit Kaltwasser führt der Kolben 15 einen Preßvorgang durch, d. h. er preßt das Kaffeepulver gegen das Sieb 13 zu einer formstabilen Scheiben oder Tablette mit entsprechendem Durchmesser und über den Durchmesser etwa konstanter Dicke bzw. Höhe. Durch eine Entspannung des Druckes im Hydraulikraum 25 und/oder eine kurzzeitige Beaufschlagung des Hydraulikraums 29 kann der Kolben 15 geringfügig druckentlastet oder aber auch um einen oder mehrere Millimeter aus der Preßstellung zurückgefahren werden, damit während des sich anschließenden Brühvorgangs das aus der Stirnfläche 32 in über den Umfang verteilten Löchern austretende Heißwasser sich gut an der Tablette des Kaffeepulvers verteilen kann. Durch entsprechende Mengensteuerung des Heißwassers läuft die Brühcharge ab. Am Ende der Brühcharge wird der Hydraulikraum 25 auf jeden Fall nochmals mit Druck beaufschlagt, so daß ein Auspreßvorgang der Kaffeepulvertablette stattfindet, wobei die dabei austretende Flüssigkeit auch zu dem Kaffeegetränk ausläuft. Der Auslauf geschieht während der gesamte Brühphase über das Auslaufröhrchen 12, unter dem sich ein entsprechend großes Gefäß, im vorliegenden Falle ein Kaffeekännchen, zur Aufnahme zweiter Einzeltassen, befindet. Wenn der Brühvorgang und der Preßvorgang beendet sind, also der Hydraulikraum 25 wie-der entspannt ist, kann der Rotor 6 um weitere 90° weiterdrehen, so daß jetzt letztendlich der Arbeitsraum 24 vor eine unten am Gehäuse angeordnete Öffnung 54 gelangen kann. Dann wird wiederum der Hydraulikraum 25 mit kaltem Wasser beaufschlagt, wodurch der Ausstoßvorgang der ausgelaugten Kaffeepulvertablette stattfindet. Da der Kolben in seiner Endstellung fährt, wird der Arbeitsraum 24 vollständig gereinigt. Es erfolgt der Trockenauswurf der Tablette. In Figur 2 ist die diesbezügliche Stellung für den kleinen Kolben 16 dargestellt. Man erkennt, daß der Durchbruch 46 auch von der Dichtung 31 überfahren wurde, so daß in dieser Stellung das den Hydraulikraum 29 beaufschlagende Kaltwasser zu Spülzwecken rückwärts durch einen Teil der Leitung 48 bis zu dessen Ventil erfolgen kann.

Eine analoge Betriebsweise ergibt sich dann, wenn nicht die große Brühcharge, sondern die kleine Brühcharge mit Hilfe des Arbeitsraums 28 durchgeführt werden soll. Die Geometrie sei dabei so bemessen, daß die Brühcharge einer Einzeltasse entspricht bzw. zugeordnet ist. Hierbei wird in der Anfangsstellung der Arbeitsraum 28 unter die Öffnung 50 gefahren, wobei auch der kleine Kolben 16 seine tiefste Lage mit seiner Anlage an der Zwischenwand 18 einnimmt. Die Dosiereinrichtung 52 ist mindestens zur Abgabe von zwei verschiedenen Mengen Kaffeepulver ausgebildet. Es wird jetzt die kleinere Kaffeepulvermenge abgerufen, woraus sich der entsprechende weitere Zyklus anschließt. Es ist durchaus möglich, nicht nur zwei Kaffeepulvermengen und zwei entsprechende Wassermengen zu zwei unterschiedlichen Brühchargen des Getränk zu kombinieren. Es ist durchaus auch möglich, den einen Raum 24 für mehrere verschiedene Getränke und den Arbeitsraum 28 für mehrere andere verschiedene Getränke vorzusehen bzw. zu benutzen. Es versteht sich, daß die jeweiligen, unterschiedlichen Kaffeepulvermengen von der Dosiereinrichtung 52 abgerufen werden und daß auch die zugehörigen Wassermengendosierungen entsprechend gesteuert werden müssen.

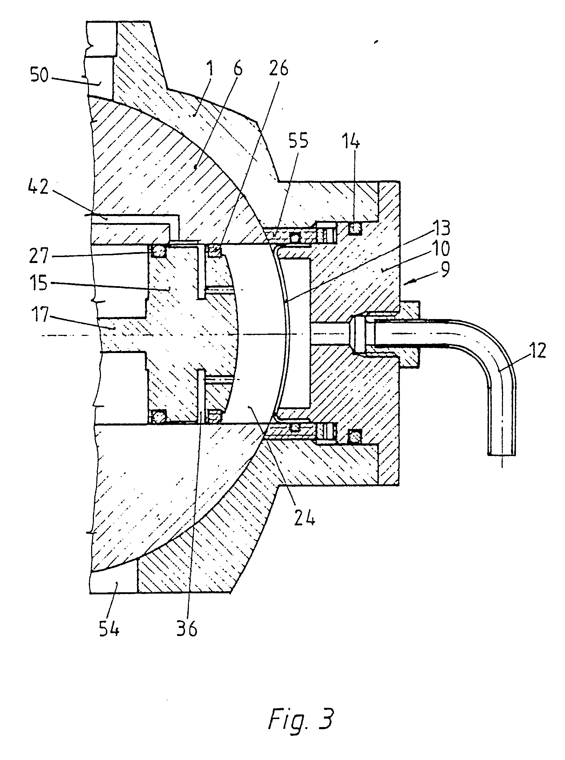

Die in Figur 3 in einem Teilausschnitt dargestellte weitere Ausführungsform der Kaffeezubereitungsmaschine ist an sich grundsätzlich ähnlich bzw. analog aufgebaut wie die Ausführungsform nach den Figuren 1 und 2. Lediglich die Dichtungen 34 und 35 auf dem Rotor 6 sind nicht vorgesehen, stattdessen ist im Bereich des Auslaufdeckels 10 stillstehend eine Dichtung 55 angeordnet, die zur Abdichtung der Arbeitsräume 24 und 28 in der jeweiligen Brühstellung dient. Die Anordnung der Dichtung 55 hat den Nachteil, daß sie nur in der Brühstellung eine Dichtfunktion aufweist, während die mitbewegten Dichtungen 34 und 35 den Vorteil haben, daß auch in anderen Stellungen eine Dichtfunktion — zumindest teilweise — erreichbar ist. Bei statorseitig stillstehend angeordneter Dichtung 55 muß der Rotor kugelförmig oder walzenförmig ausgebildet sein.

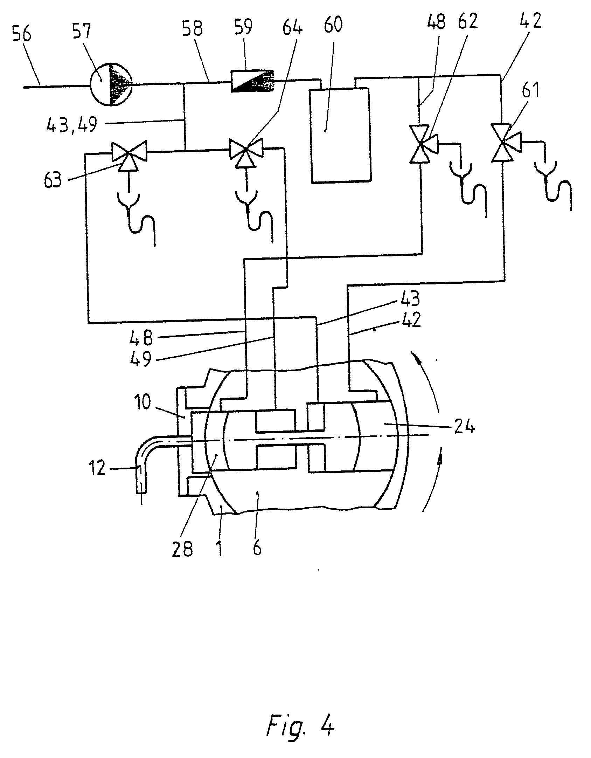

Der hydraulische Schaltplan gemäß Figur 4 verdeutlicht weitere Einzelheiten. Das Wasserleitungsnetz 56 ist mit dem Eingang der Pumpe 57 verbunden, von der eine Leitung 58 ausgeht, die über einen als Turbine ausgebildeten Wasserzähler 59 zu einem Durchlauferhitzer 60 führt. Von dem Durchlauferhitzer führen heißwasserseitig die beiden Leitungen 42 und 48 über je ein eingeschaltetes Magnetventil 61 und 62 zu den Arbeitsräumen 24 bzw. 28. Von der Leitung 58 zweigt vor dem Wasserzähler 59 die Leitung 43 und die Leitung 49 ab, die für Kaltwasser bestimmt sind. In der Leitung 43 ist ein Magnetventil 63 und in der Leitung 49 ein Magnetventil 64 vorgesehen. Die Magnetventile 61 bis 64 sind elektrisch schaltbare Drei-/Zweiwegeventile und verfügen jeweils über einen eigenen Anschluß bzw. Abgang, der mit der Atmosphäre und einem Wasserablauf verbunden ist. Für die Betätigung der Magnetventile 63 und 64 genügt eine Zeitsteuerung, die die Werte berücksichtigt, in denen sich ein entsprechender Druck in den Hydraulikräumen 25 und 29 aufbaut. Die Magnetventile 61 und 62 sind mit dem Wasserzähler 59 zu einer Dosiereinrichtung für das Heißwasser zusammengefaßt, so daß hiermit die Brühchargen mit großer Genauigkeit einstellbar sind bzw. abgerufen werden können. Da die Magnetventile 61 bis 64 zu jeder beliebigen Zeit umgesteuert werden können, können die verschiedenen Räume auch jeweils wunschgemäß beaufschlagt, druckentlastet, entlüftet oder auch gespült werden.

Bezugszeichenliste :

1 Gehäuse
2 Deckel
3 Deckel
4 Schranke
5 Innenraum
6 Rotor
7 Drehachse
8 Stutzen
9 Auslauf
10 Auslaufdeckel
11 Schraube
12 Auslaufröhrchen
13 Sieb
14 Dichtung
15 Kolben
16 Kolben
17 Kolbenstange
18 Zwischenwand
19 Dichtung
20 Bohrung
21 Bohrung
22 Laufbüchse
23 Laufbüchse
24 Arbeitsraum
25 Hydraulikraum
26 Dichtung
27 Dichtung
28 Arbeitsraum
29 Hydraulikraum
30 Dichtung
31 Dichtung
32 Stirnfläche
33 Stirnfläche
34 Dichtung
35 Dichtung
36 Zufuhrleitung
37 Kolbennut
38 Durchbruch
39 Ringraum
40 Drehverbindung
41 Teil
42 Leitung
43 Leitung
44 Zufuhrleitung
45 Kolbennut
46 Durchbruch
47 Ringraum
48 Leitung
49 Leitung
50 Öffnung
51 Zugabetrichter
52 Dosiereinrichtung
53 Pfeil
54 Öffnung
55 Dichtung
56 Wasserleitungsnetz
57 Pumpe
58 Leitung
59 Wasserzähler
60 Durchlauferhitzer
61 Magnetventil
62 Magnetventil
63 Magnetventil
64 Magnetventil

**Patentansprüche**

1. Automatisch arbeitende Kaffeezubereitungsmaschine mit einem Gehäuse (1), an dem über den Umfang verteilt ein Zugabetrichter (51) für dosiertes Kaffeepulver, ein mit einem Sieb (13) versehener Auslauf (9) für das zubereitete Kaffeegetränk sowie eine Öffnung (54) zum Abführen der Rückstände vorgesehen sind, mit einem in dem Gehäuse (1) gelagerten und absatzweise angetriebenen Rotor (6), der mindestens zwei randoffene und in der Brühstellung durch das Sieb (13) des Auslaufes (9) abgedeckte und abgedichtete Arbeitsräume (24, 28) aufweist, in denen das Kaffeepulver mittels mindestens zweier miteinander verbundener, gegenläufig hydraulisch betätigbarer Kolben (15, 16) wahlweise verdichtet wird und in der Brühstellung von heißem, dosiertem Wasser in Richtung auf den Auslauf (9) am Gehäuse (1) durchflossen ist, dadurch gekennzeichnet, daß dem Zugabetrichter (51) eine wahlweise mindestens zwei unterschiedlich große Kaffeepulvermengen abgebende Dosiereinrichtung (52) zugeordnet ist, daß eine Einrichtung (59, 61, 62) zum wahlweisen Beschikken der Arbeitsräume (24, 28) mit mindestens zwei unterschiedlich großen Mengen heißen Wassers vorgesehen ist, daß die beiden Kolben (15, 16) und damit die Arbeitsräume (24, 28) unterschiedliche Durchmesser aufweisen, und daß die Beschickung der Arbeitsräume (24, 28) mit heißem Wasser einerseits und die hydraulische Betätigung der Kolben (15, 16) andererseits voneinander getrennt und über separate Ventile (61, 62, 63, 64) und Leitungen (42, 48, 43, 49) gesteuert sind.

2. Kaffeezubereitungsmaschine nach Anspruch 1, dadurch gekennzeichnet, daß die Leitungen (42, 48) für die Beschickung der beiden Arbeitsräume (24, 28) und die Leitungen (43, 49) für die Betätigung der beiden Kolben (15, 16) auf der dem Antrieb des Rotors (6) abgekehrten Seite über Drehverbindungen (40) an den Rotor (6) herangeführt sind, und daß in den vier Leitungen vier einzeln steuerbare Magnetventile (61, 62, 63, 64) angeordnet sind.

3. Kaffeezubereitungsmaschine nach Anspruch 1 und 2, dadurch gekennzeichnet, daß jeder Arbeitsraum (24, 28) eine eigene, auf dem Rotor (6) angeordnete Dichtung (34, 35) aufweist.

4. Kaffeezubereitungsmaschine nach Anspruch 1 und 2, dadurch gekennzeichnet, daß für jeden Arbeitsraum (24, 28) eine gemeinsame, auf dem Gehäuse (1) angeordnete Dichtung (55) vorgesehen ist, die den Auslauf (9) für das Kaffeegetränk umgibt.

5. Kaffeezubereitungsmaschine nach Anspruch 1, dadurch gekennzeichnet, daß die beiden Kolben (15, 16) je eine die Umlaufbahn des Rotors (6) ergänzende Stirnfläche (32, 33) aufweisen und über eine gemeisame, abgedichtet im Rotor geführten Kolbenstange (17) so miteinander verbunden sind, daß der Anschlag des einen Kolbens (15) an einer die Führung der Kolbenstange (17) aufnehmende Zwischenwand (18) den Hub des jeweils anderen Kolbens (16) mit seiner Stirnfläche (33) in der Umlaufbahn des Rotors (6) begrenzt.

6. Kaffeezubereitungsmaschine nach Anspruch 5, dadurch gekennzeichnet, daß jeder Kolben (15, 16) zwei Dichtungen (26, 27 ; 30, 31) aufweist, zwischen denen die Zufuhrleitung (42, 36 bzw. 48, 44) für das heiße Wasser in der Brühstellung in den Arbeitsraum (24, 28) hinein endet, und daß die Zufuhrleitung in der Zylinderwandung des Kolbens angeordnete Durchbrüche (38, 46) aufweist, die in der Ausstoßstellung von der hinteren Dichtung (27, 31) des Kolbens (15, 16) überfahren sind.

7. Kaffeezubereitungsmaschine nach Anspruch 1 und 2, dadurch gekennzeichnet, daß die Drehverbindungen (40) durch die Leitungen (42, 48, 43, 49) zu den Kolben (15, 16) und den Arbeitsräumen (24, 28) frei auf der dem Antrieb des Rotors (6) abgekehrten Seite angeordnet sind, und daß der Durchlauferhitzer (60) aus der Achse (7) des Rotors (6) heraus nach hinten versetzt vorgesehen ist.

8. Kaffeezubereitungsmaschine nach Anspruch 1, dadurch gekennzeichnet, daß die unterschiedlichen Durchmesser der Kolben (15, 16) im Hinblick auf die gewünschte Ausnutzung des Kaffeepulvers so gewählt sind, daß das dosierte, gepreßte Kaffeepulver ein optimales Durchmesser/Dickenverhältnis aufweist.

## Claims

1. Automatically operating coffee-making machine with a housing (1), on which there are provided, distributed around the circumference, a feed funnel (51) for apportioned coffee powder, an outflow (9) for the made coffee beverage and provided with a sieve (13), and also an opening (54) for removing the residues, with a rotor (6), which is mounted in the housing (1) is driven intermittently and has at least two working spaces (24, 28) open at the borders and closed off and optionally sealed in the infusion position by the sieve (13) of the outflow (9), in which spaces the coffee powder is optionally compacted by means of at least two interconnected, hydraulically counter-operable plungers (15, 16) and through which, in the infusion position, hot, apportioned water flows in the direction of the outflow (9) on the housing (1), characterized in that the feed funnel (51) is assigned an apportioning device (52) optionally dispensing at least two different amounts of coffee powder, in that a device (59, 61, 62) is provided for the optional charging of the working spaces (24, 28) with at least two different amounts of hot water, in that the two plungers (15, 16), and consequently the working spaces (24, 28) have different diameters, and in that the charging of the working spaces (24, 28) with hot water on the one hand and the hydraulic operation of the plungers (15, 16) on the other hand are controlled independently of each other and via separate valves (61, 62, 63, 64) and lines (42, 48, 43, 49).

2. Coffee-making machine according to Claim 1, characterized in that the lines (42, 48) for the charging of the two working spaces (24, 28) and the lines (43, 49) for the operation of the two plungers (15, 16) are led on the side remote from the drive of the rotor (6) via revolving joints (40) to the rotor (6), and in that four individually controllable solenoid valves (61, 62, 63, 64) are arranged in the four lines.

3. Coffee-making machine according to Claims 1 and 2, characterized in that each working space (24, 28) has an own seal (34, 35), arranged on the rotor (6).

4. Coffee-making machine according to Claims 1 and 2, characterized in that for each working space (24, 28) there is provided a common seal (55), which is arranged on the housing (1) and surrounds the outflow (9) for the coffee beverage.

5. Coffee-making machine according to Claim 1, characterized in that the two plungers (15, 16) each have an end face (32, 33), completing the circumferential path of the rotor (6) and are interconnected via a common plunger rod (17), which is guided in a sealed-off manner in the rotor, in such a way that the stop of the one plunger (15) limits at an intermediate wall (18), accommodating the guide of the plunger rod (17), the stroke of the respective other plunger (16) with its end face (33) in the circumferential path of the rotor (6).

6. Coffee-making machine according to Claim 5, characterized in that each plunger (15, 16) has two seals (26, 27 ; 30, 31), between which the supply line (42, 36 and 48, 44, respectively) for the hot water ends in the infusion position by entering the working space (24, 28), and in that the supply line has clearances (38, 46) arranged in the cylinder wall of the plunger, over which clearances the rear seal (27, 31) of the plunger (15, 16) moves in the discharge position.

7. Coffee-making machine according to Claims 1 and 2, characterized in that the revolving joints (40) are arranged through the lines (42, 48, 43, 49) to the plungers (15, 16) and the working spaces (24, 28) freely on the side remote from the drive of the rotor (6), and in that the flow heater (60) is provided offset to the rear from the axis (7) of the rotor (6).

8. Coffee-making machine according to Claim 1, characterized in that the different diameters of the plungers (15, 16) are chosen with regard to the desired utilization of the coffee powder in such a way that the apportioned, pressed coffee powder has an optimum diameter/thickness ratio.

## Revendications

1. Machine à café à fonctionnement automatique avec un boîtier (1) sur le pourtour duquel sont répartis une trémie (51) pour l'alimentation dosée en poudre de café, un orifice de sortie (9) muni d'un filtre (13) pour le breuvage de café préparé, ainsi qu'une ouverture (54) pour l'évacuation des résidus, avec un rotor (6) tournant dans le boîtier (1) et entraîné par intermittence, qui présente au moins deux chambres de travail (24, 28) à bord ouvert et recouvertes, dans la position d'infusion, par le filtre (13) de l'orifice de sortie (9) et pourvues de joints étanches, dans lesquelles la poudre de café est comprimée sélectivement au moyen d'au moins deux pistons (15, 16) accouplés ensemble, actionnés hydrauliquement en sens contraires, et est traversée, dans la position d'infusion, par de l'eau très chaude dosée en direction de l'orifice de sortie (9) sur le boîtier (1), caractérisée en ce que la trémie (51) d'alimentation est associée à un dispositif doseur (52) débitant sélectivement au moins deux quantités différentes de poudre de café, en ce qu'il est prévu un dispositif (59, 61, 62) pour alimenter sélectivement les chambres de travail (24, 28) avec au moins deux quantités différentes d'eau très chaude, en ce que les deux pistons (15, 16) et par suite les chambres de travail (24, 28) présentent des diamètres différents, et en ce que l'alimentation des chambres de travail (24, 28) en eau très chaude, d'une part, et l'actionnement hydraulique des pistons (15, 16) d'autre part, sont commandés indépendamment l'un de l'autre par des vannes distinctes (61, 62, 63, 64) et par des conduits distincts (42, 48, 43, 49).

2. Machine à café selon la revendication 1, caractérisée en ce que les conduits (42, 48) d'alimentation des deux chambres de travail (24, 28) et les conduits (43, 49) pour l'actionnement des deux pistons (15, 16) sont amenés au rotor (6) sur le côté opposé à l'entraînement du rotor (6) au moyen de raccords tournants (40) et en ce que quatre électrovannes (61, 62, 63, 64) commandées individuellement sont disposées sur ces quatre conduits.

3. Machine à café selon les revendications 1 et 2, caractérisée en ce que chaque chambre de travail (24, 28) présente son propre joint d'étanchéité (34, 35) disposé sur le rotor (6).

4. Machine à café selon les revendications 1 et 2, caractérisée en ce qu'il est prévu pour chaque chambre de travail (24, 28) un joint commun (55) disposé sur le boîtier (1), entourant l'orifice de sortie (9) du breuvage de café.

5. Machine à café selon la revendication 1, caractérisée en ce que les deux pistons (15, 16) présentent chacun une surface frontale (32, 33) complétant l'orbite du rotor (6) et sont reliés ensemble par une tige de piston (17) commune, guidée de manière étanche dans le rotor, de telle manière que l'arrivée en butée d'un piston (15) contre une cloison intermédiaire (18) dans laquelle est logé le guidage de la tige (17) des pistons limite la course de l'autre piston (16) avec sa surface frontale (33) dans l'orbite du rotor (6).

6. Machine à café selon la revendication 5, caractérisée en ce que chaque piston (15, 16) présente deux joints d'étanchéité (26, 27 ; 30, 31) entre lesquels aboutit le conduit d'alimentation (42, 36 et 48, 44) en eau très chaude dans les chambres de travail (24, 28) en position d'infusion, et en ce que le conduit d'alimentation présente des ouvertures (38, 46) disposées dans la paroi cylindrique du piston, qui sont recouvertes, dans la position d'expulsion, par le joint postérieur (27, 31) du piston (15, 16).

7. Machine à café selon les revendications 1 et 2, caractérisée en ce que les raccords tournants (40) à travers les conduits (42, 48, 43, 49) vers les pistons (15, 16) et vers les chambres de travail (24, 28) sont disposés librement sur le côté opposé à l'entraînement du rotor (6) et en ce que le chauffe-eau instantané (60) est prévu décalé vers l'arrière par rapport à l'axe (7) du rotor (6).

8. Machine à café selon la revendication 1, caractérisée en ce que les diamètres différents des pistons (15, 16) sont choisis en considération de l'utilisation désirée de la poudre de café de telle sorte que la poudre de café dosée et comprimée présente un rapport optimal diamètre/épaisseur.

Fig. 1

Fig. 2

2

Fig. 3

Fig. 4